Europäisches Patentamt

European Patent Office

Office européen des brevets

(19)

(11) Veröffentlichungsnummer: **0 277 285**

**A1**

(12) **EUROPÄISCHE PATENTANMELDUNG**

(21) Anmeldenummer: **87116045.3**

(22) Anmeldetag: **31.10.87**

(51) Int. Cl.⁴: **A01K 15/02**

(30) Priorität: **29.01.87 DE 3702599**

(43) Veröffentlichungstag der Anmeldung:
**10.08.88 Patentblatt 88/32**

(84) Benannte Vertragsstaaten:
**AT BE CH DE ES FR GB GR IT LI LU NL SE**

(71) Anmelder: **ALUTEAM Sport- und Freizeit GmbH**
**Postfach 1160**
**D-5440 Mayen(DE)**

(72) Erfinder: **Neisius, Vinzenz**
**Hinter dem Schützenplatz**
**D-5405 Ochtendung(DE)**
Erfinder: **Scheid, Josef**
**Willibrodstrasse 18**
**D-5472 Plaidt(DE)**

(74) Vertreter: **Zellentin, Wiger et al**
**Patentanwälte Dr. rer. nat. Rüdiger Zellentin**
**Dipl.-Ing. Wiger Zellentin Rubensstrasse 30**
**D-6700 Ludwigshafen(DE)**

(54) **Ringführanlage.**

(57) Die vorliegende Erfindung betrifft eine Ringführanlage zum Bewegen von Reittieren im Umlauf, bei der in einem Tunnel ein an den Enden geschlossener Führungszahnriemen angeordnet ist. Der Zahnriemen ist motorisch antreibbar und steht mit einem oder mehreren Schlitten in Eingriff, die dem Führungszahnriemen zugekehrte Zahnleisten besitzen. Der Tunnel weist einen Schlitz auf, durch den an den Schlitten angeordnete Befestigungselemente ragen und ist an einer Tragkonstruktion anbringbar.

Fig 4

## Ringführanlage

Die vorliegende Erfindung betrifft eine Ringführanlage, mit deren Hilfe Reittiere ohne Personalaufwand bewegt werden können.

Da Pferde in der Regel nicht täglich geritten werden können, diese aber bei Stallhaltung auf tägliche Bewegung zur Gesunderhaltung angewiesen sind, werden sie in Reithallen oder anderen geeigneten Gebäuden oder auch im Freien von Hand geführt und bewegt. Diese Art der Inbewegunghaltung ist, wie ohne weiteres ersichtlich, personalaufwendig und damit kostspielig.

Es sind daher maschinelle Vorrichtungen zu diesem Zweck entwickelt worden. Eine bekannte derartige Anlage besteht aus mittig drehbar gelagerten kreuzweise zueinander angeordneten Balken. Das derartig entstehende Drehkreuz ist motorisch antreibbar.

An den Enden der Balken befindet sich eine Befestigung für die Zügel der Pferde, die mit dieser Vorrichtung bewegt werden können, ohne die möglichkeit zu haben, auszubrechen.

Derartige Vorrichtungen haben jedoch entscheidende Nachteile, wovon einer darin besteht, daß diese auf stehende Anordnung angewiesen sind und nur schwer demontiert werden können, so daß die entsprechende Fläche belegt ist.

Ein anderer gravierender Nachteil wird in der Beschränkung auf eine reine Kreisbewegung gesehen, die tierpsychologisch und tierphysiologisch nicht erwünscht ist.

Die vorliegende Erfindung hat sich daher die Aufgabe gestellt, eine Ringführanlage zu schaffen, die in ihrer Montage nicht in der oben genannten Weise beschränkt ist und mit der auch andere als Kreisbewegungen möglich sind. Die Lösung dieser Aufgabe gelingt mit einer Ringführanlage zum Bewegen von Reittieren im Umlauf, die erfindungsgemäß folgende Merkmale aufweist

a) in einem Tunnel ist ein an den Enden geschlossener Führungszahnriemen angeordnet;

b) der Zahnriemen ist motorisch antreibbar;

c) der Führungszahnriemen steht mit einem oder mehreren Schlitten in Eingriff;

d) der Tunnel weist einen Schlitz auf, durch den an den Schlitten angeordnete Befestigungselemente ragen und ist an einer Tragkonstruktion anbringbar.

Da die erfindungsgemäß eingesetzten endlosen Zahnriemen flexibel sind, ist eine derartige Vorrichtung nicht auf eine Kreisführung beschränkt, sondern es sind grade Abschnitte mit anschließenden Halbkreisen, ebenso wie eine wellenlinlienförmige Linienführung, also unter Wechsel des Kurvensinnes möglich.

Da der Antrieb des Zahnriemens über dessen Zähne erfolgen kann, ist auch kein zentraler Antrieb erforderlich, dieser befindet sich vielmehr an der Peripherie, d.h. am Tunnel, der Innenraum bleibt frei.

Dadurch entsteht die Möglichkeit, die Ringführanlage an der Bande einer Halle oder frei stehend auf Ständern oder insbesondere an der Gebäudedecke anzuordnen, so daß der darunter befindliche Raum unbeeinträchtigt bleibt.

In der Regel ist ein einziger Antrieb nicht ausreichend, um die Vorrichtung in Betrieb zu halten, es sind daher mehrere Motoren über den Umlauf verteilt vorzusehen. Diese Anordnung hat zum einen den Vorteil, daß die Dehnung des Riemens gering und der Zahnabstand des Riemens damit weitgehend erhalten bleibt. Zum anderen können die Antriebsstationen auch gleichzeitig als Tragkonstruktion dienen.

Der Antrieb des Führungszahnriemens kann dabei über eine Schlingenführung des Zahnriemens derart erfolgen, daß in der Schlinge ein motorisch angetriebenes Zahnrad angeordnet wird. Im Bereich der Schlinge weist der Tunnel zu dieser hin offene Durchbrüche auf, wobei die Umlenkung zum Antriebszahnrad über Umlenkrollen erfolgt. Innerhalb der Schlinge kann zur Führung des Schlittens ein separates Leitelement vorgesehen sein, an das der rückwärtige, dem Führungszahnriemen zugekehrte Teil des Schlittens anliegen kann. Als Leitelement kann dabei auch die Tunnelwandung oder ein Bereich davon dienen.

Eine andere Möglichkeit, den Führungszahnriemen anzutreiben besteht darin, den Zahnriemen doppelseitig auszubilden und diesen über einen separaten umlaufenden Zahnriemen zu steuern, wobei der Tunnel eine diesem zugewandte Ausnehmung einer Länge besitzt, die einer ausreichenden Zähnezahl gegenseitigen Eingriff ermöglicht.

Auch in diesem Falle sind innenliegende Umlenkrollen zur tangentialen Zuführung des separaten umlaufenden Zahnriemens zum Führungszahnriemen vorgesehen, die, bei doppelseitiger Zahnung des letzteren, auch als Antriebsräder dienen können. Die Abstützung des separaten umlaufenden Zahnriemens gegen den Führungszahnriemen erfolgt durch ein in der Ausnehmung angeordnetes Leitelement.

Das Befestigungselement kann am Schlitten dem Zahnriemen gegenüberliegend angeordnet oder auch um 90° versetzt sein, je nach dem stehende oder hängende Montage der Ringführungsanlage gewünscht ist, wobei in letzterem Falle das Befestigungselement senkrecht nach unten aus dem Tunnel herausragt.

In jedem Falle ist der Schlitten zur Herabsetzung der Reibungskräfte vorzugsweise auf Rollen gelagert und gegen Verkanten geschützt. Dies kann z.B. dadurch erfolgen, daß am vorderen und rückwärtigen Bereich des Schlittens Rollen eines Durchmessers angeordnet sind, der geringfügig unter dem Tunnelquerschnitt liegt, so daß diese nicht gleichzeitig Vorder-und Rückwand berühren können. Zusätzlich können im Tunnel angeordnete Gleitstreifen aus reibungsarmem Material die Reibung des Zahnriemens mindern.

Im Bereich der rückwärtigen Ausnehmungen für den Antrieb können diese an entsprechenden oberen und unteren Kragen des Tunnels anliegen wobei die Leitelemente oder der separate Zahnriemen dazwischen angeordnet ist.

Im Bereich von Kurven oder im Falle der ersterwähnten Antriebsvariante, bei der der Führungszahnriemen unter Bildung einer Schlinge aus dem Tunnel herausgeführt ist, können geringfügige Differenzen im Zahnabstand auftreten. Es ist daher ein entsprechendes Spiel zwischen der Zahnung des Schlittens und der des Zahnriemens vorgesehen.

Der Schlitten ist vorzugsweise für um je 90° versetzten Einbau im Tunnel vorgefertigt, d.h. er weist mehrere entsprechende Zahnleisten auf, von denen der jeweils erforderliche dem Zahnriemen zugekehrt wird.

Anhand der beiliegenden Figuren wird die vorliegende Erfindung näher erläutert.

Fig. 1 und Fig. 2 zeigen die Ringführanlage im Schnitt;

Fig. 3 zeigt den Antrieb unter Schlingenführung;

Fig. 4 zeigt den Antrieb unter Verwendung eines separaten Zahnriemenumlaufs;

Fig. 5 zeigt eine stehende und

Fig. 6 eine hängende Anordnung;

Fig. 7 - 12 zeigen grundsätzliche Führungsmöglichkeiten.

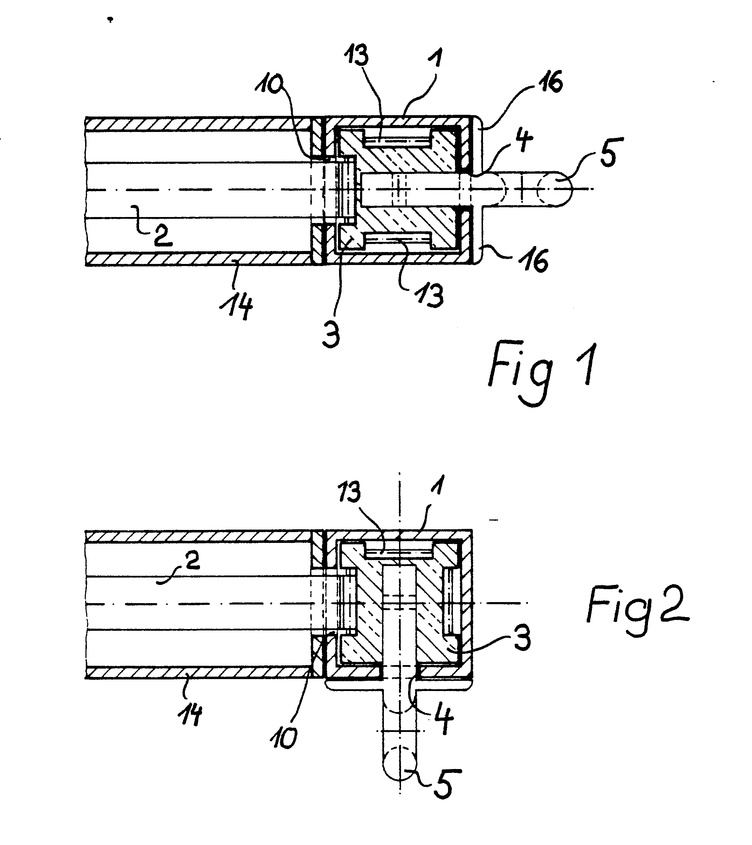

In Fig. 1 und 2 ist der Tunnel 1 gezeigt, in dem der Schlitten 3 beweglich und durch diesen geführt gelagert ist.

Fig. 1 zeigt dabei eine Anordnung des Tunnels mit waagerecht verlegtem Schlitz 4, in Fig. 2 befindet sich der Schlitz 4 in senkrechter Position. Durch den Schlitz 4 ragen Befestigungselement 5 nach außen, an denen die Zügel der Pferde eingehängt werden können.

Der Schlitten 3 weist vorgefertigte Zahnleisten 13 auf, die mit dem Führungszahnriemen 2 in Eingriff stehen und synchron mit diesem bewegt werden.

Für einen beliebigen oder veränderbaren Einbau, je nach dem in welche Raumachse die Befestigungselemente aus dem Tunnel 1 herausragen sollen, bzw. wie der Schlitz 4 angeordnet werden soll, sind , um 90° versetzt, mehrere Zahnleisten ggf. an dem Schlitten 1 vorgefertigt. In einer Tragkonstruktion 14, an der der Tunnel befestigt ist, wird der Zahnriemen 2 aus dem Tunnel 1 aus Durchbrüchen 10 herausgeführt und von einem weiter unten gezeigten Antrieb in Bewegung versetzt. Im übrigen kann der Tunnel selbst aufgeständert oder von einer Gebäudedecke abgehängt sein.

An dem Befestigungselement 5 können Flügel 16 angeordnet sein, die an der Außenfläche des Tunnels gleiten und einem Verkanten entgegenwirken. Dabei sind die Flügel 16 ggf als Verschleißteile, z.B. aus reibungsarmem Kunststoff gefertigt.

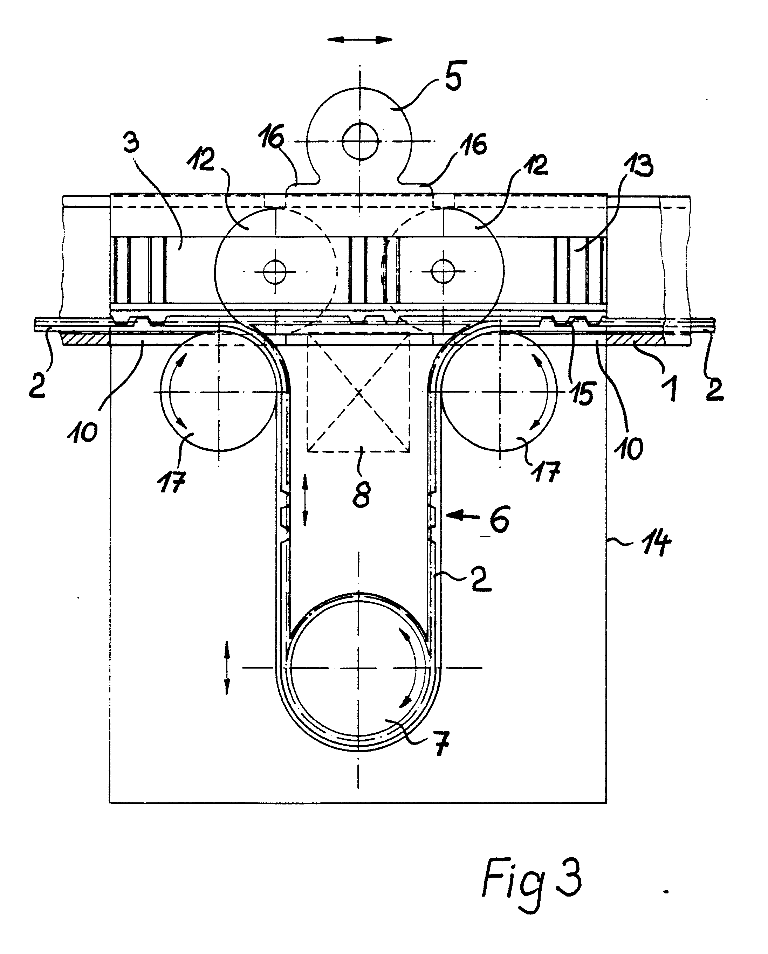

Fig. 3 zeigt den Antrieb des Schlittens 3, bzw. des Führungszahnriemens 2. Dabei wird der Führungszahnriemen 2 über die Umlenkräder 13 in einer Schlingenführung 6 einem Antriebs-Zahnrad 7 zugeführt. Die Rückwand des Tunnels 1 ist hier durchbrochen und ein Leitelement 8 führt den Schlitten über den Durchbruch 10 hinweg. Der Schlitten 3 besitzt Zahnleisten 13, die vorzugsweise deutlich länger als der Durchbruch sind.

Zwischen der Zahnleiste 13 und der Zahnung des Führungszahnriemens 2 besteht ein ausreichendes Speil, da sich durch Kurvenführung und durch den Antrieb durch das Zahnrad 7 der Abstand der Zahnflanken voneinander verändert.

Der Schlitten 3 weist im Tunnel 1 mitlaufende Rollen 12 auf, die an der vorderen oder hinteren inneren Tunnelwandung abrollen. Die Rollen 12 sind dabie vorzugsweise je oberhalb und unterhalb des Schlittens paarweise angeordnet. Bei nur mittigem Durchbruch 10 des Tunnels können obere und untere Führungen an der dem Führungszahnriemen zugeordneten Wandung verbleiben, an denen die Rollen 12 abrollen und derart in diesem Bereich gleichzeitig anstelle des Leitelementes 8 oder zusätzlich sichern.

Aus dem Tunnel 1 ragt das Befestigungselement 5 heraus, an dem die Flügel 16 angeordnet sind.

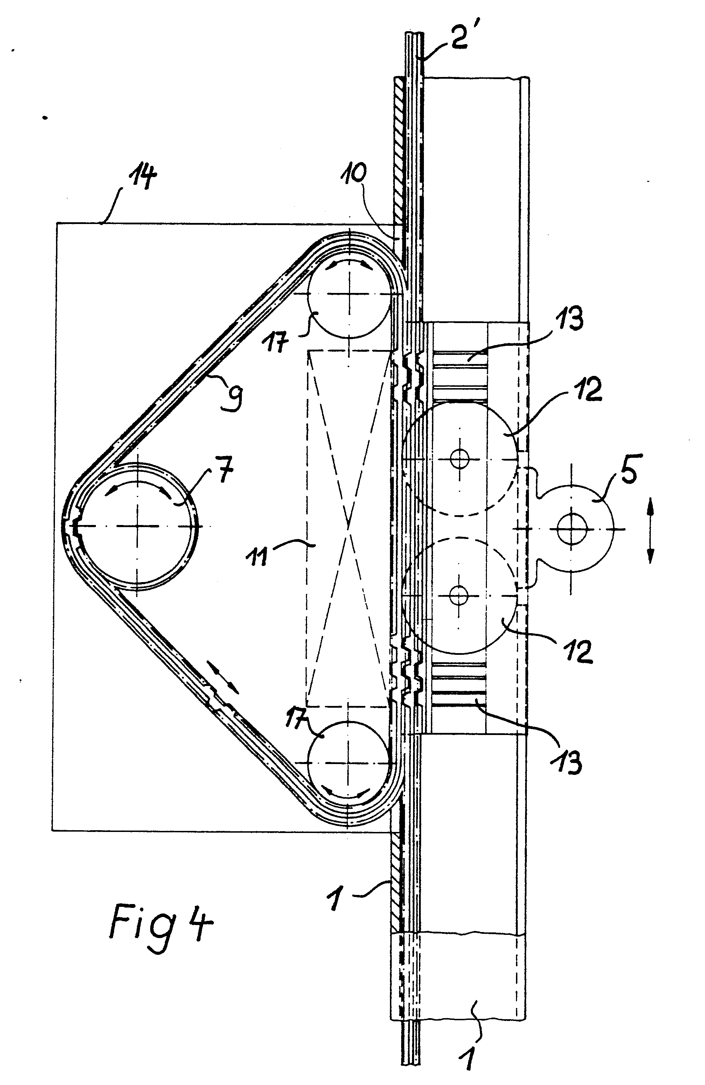

In der Antriebsvariante der Fig. 4 ist der Führungszahnriemen 2' auf der Vorder-und Rückseite beidseitig gezahnt. Schlitten 3 und Tunnel 1 entprechen der Darstellung in Fig. 2.

Mit der vom Schlitten 3, bzw. dessen Zahnleiste 13 abgekehrten Seite, steht der Zahnriemen 2' flach mit separaten endlosen doppelseitigen (oder ggf. auch nur einseitigem) Zahnriemen 9 in Eingriff. Das Leitelement 11 sichert dabei den separaten Zahnriemen 9 ab und zwingt die Zähne ineinander. Über Umlenkräder 17 wird der separate Zahnriemen 9 dem Antriebszahnrad 7 zugeführt. Eine Ausführung mit nur dem Führungszahnriemen zugekehrter Zahnung dese separaten umlaufenden Zahnriemens 9, ist bei Verwendung von außen

angreifenden Antriebszahnrädern grundsätzlich möglich, anstelle des Zahnrades 7 ist dann ein Umlenkrad 17 vorzusehen.

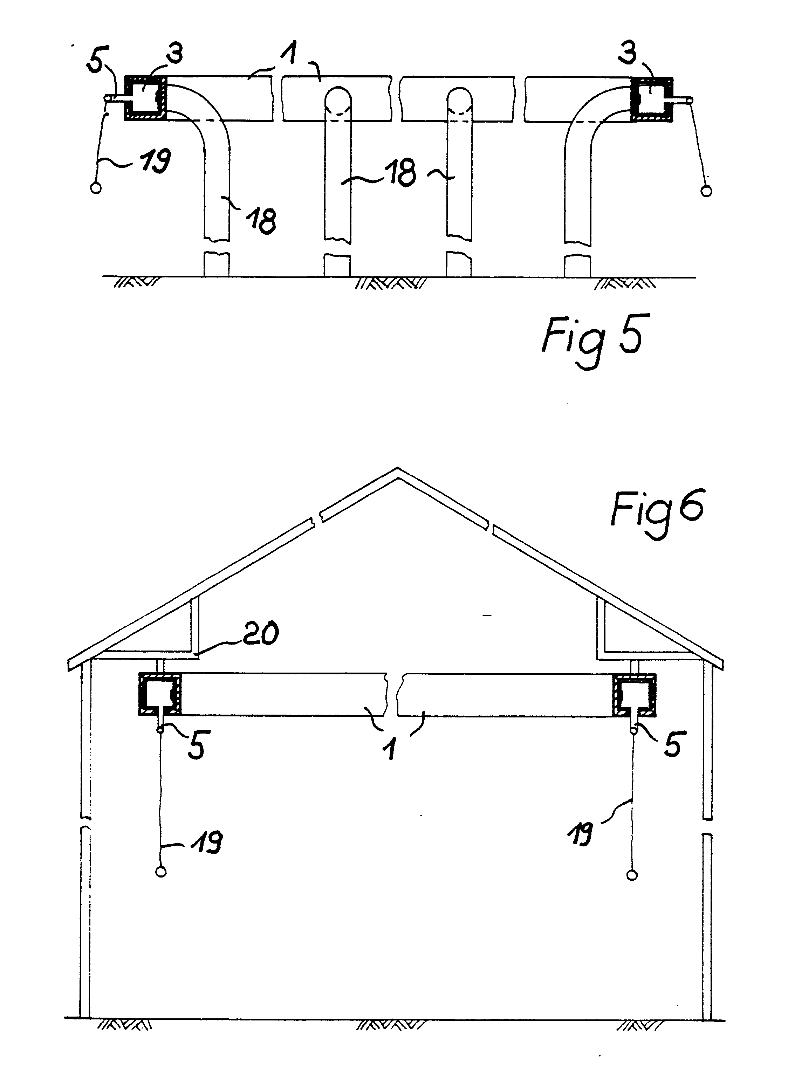

Fig. 5 zeigt die Möglichkeit eines stehenden Einbaus der Ringführanlage (obere Darstellung) und eine Ausführung, bei der der Tunnel an einer Gebäudedecke befestigt ist. Im ersteren Falle ruht der Tunnel 1 auf Ständern 18.

Am Schlitten 3 ist hierbei eine waagerechte Anordnung der Befestigungselemente 5 dargestellt, an der eine Verlängerung 19 angebracht ist, die zum Einhängen der Zügel dient.

Im zweiten Falle ist die Ringführanlage an einer Gebäudedecke 20 befestigt. Die Befestigungselemente 5 ragen nach unten aus dem Tunnel 1 und besitzen ebenfalls Verlängerungen 19.

Diese Art der Montage erlaubt eine universelle Nutzung des Gebäudes, da der Boden nicht durch eine fest installierte Ringführanlage verstellt ist.

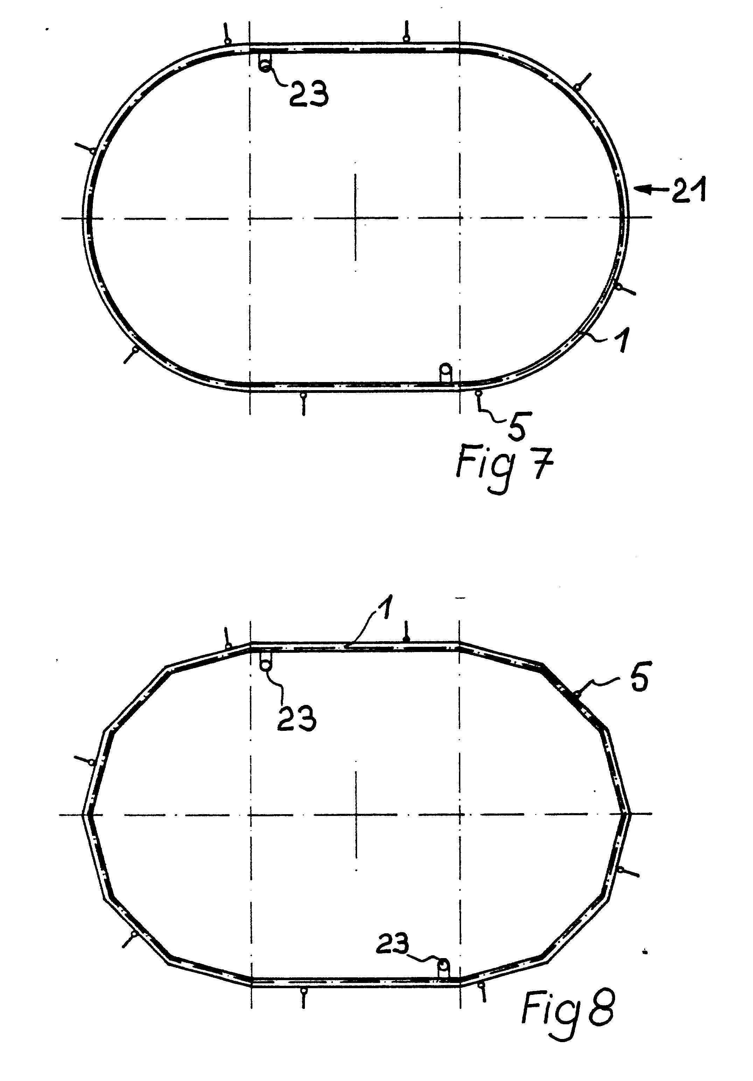

In den Fig. 7 bis 10 sind verschiedene Konturen des Umlaufs dargestellt.

In Fig. 7 schließen zwei Bogenstücke (21) zwei gerade Strecken 22 zu einem Oval zusammen. Diese Art der Linienführung ist natürlich mit einer um einen Mittelpunkt kreisenden Vorrichtung nicht möglich.

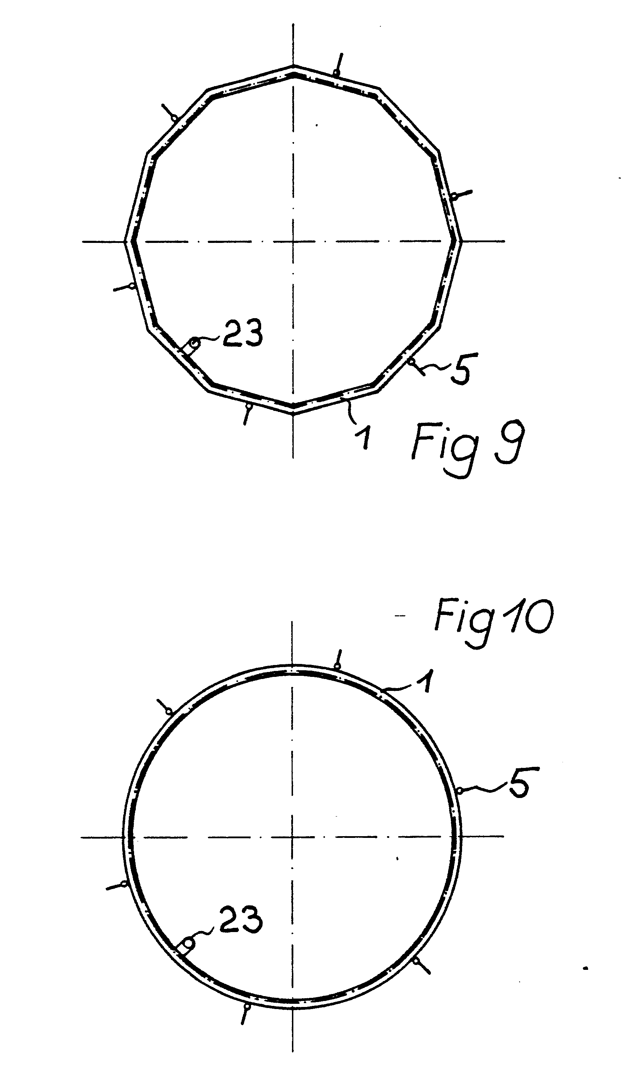

In Fig. 8 ist dargestellt, daß der Bogen auch aus kurzen geraden Tunnelsegmenten zusammengesetzt sein kann. Die Länge des Schlittens ist hier jedoch durch die so entstehenden Ecken begrenzt. In beiden Fällen sind zwei Antriebsstationen 23 dargestellt, deren Anzahl jedoch von der Länge des Umlaufs und den dadurch bedingten Reibungskräften abhängt.

Fig. 9 zeigt einen aus geraden Segmenten zusammengesetzten kreisförmigen Tunnel 1, Fig. 9 einen eckenfreien Kreis.

Gegenüber herkömmlichen Ringführanlagen bleibt hier der Innenraum innerhalb der Peripherie frei und damit anderweitig nutzbar.

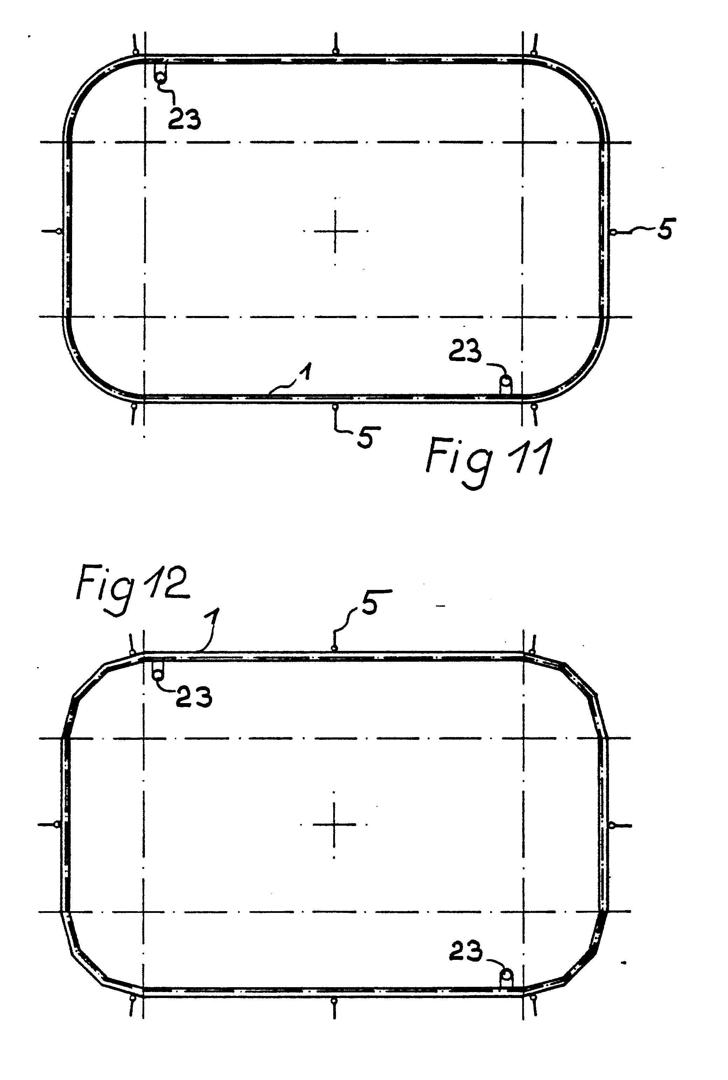

Fig. 11 und 12 zeigen rechteckförmige Umläufe.

Die vorstehende Darstellung möglicher Linienführungen ist nicht abschließend. Es bleibt darauf hinzuweisen, daß wellenförmige Gebilde mit Wechsel des Kurvensinnes und nahezu beliebiger Längen bei entsprechender Anzahl von Motoren ohne weiteres möglich sind.

**Ansprüche**

1.) Ringführanlage zum Bewegen von Reittieren im Umlauf, gekennzeichnet durch die folgenden Merkmale:

a) in einem Tunnel (1) ist ein an den Enden geschlossener Führungszahnriemen (2) angeordnet;

b) der Zahnriemen (2) ist motorisch antreibbar;

c) der Führungszahnriemen (2) steht mit einem oder mehreren Schlitten (3) in Eingriff, die dem Führungszahnriemen zugekehrte Zahnleisten (13) besitzen;

d) der Tunnel (1) weist einen Schlitz (4) auf, durch den an den Schlitten (3) angeordnete Befestigungselemente (5) ragen und ist an einer Tragkonstruktion anbringbar.

2.) Ringführanlage nach Anspruch 1, dadurch gekennzeichnet, daß der Antrieb des Führungszahnriemens (2) über in Schlingenführungen (6) des Zahnriemens angeordnete Zahnräder (7) erfolgt.

3.) Ringführanlage nach Anspruch 2, dadurch gekennzeichnet, daß innerhalb des Schlingenbereiches (6) ein Leitelement (8) für die Schlitten angeordnet ist.

4.) Ringführanlage nach Anspruch 1, dadurch gekennzeichnet, daß der Führungszahnriemen (2') doppelseitig gezahnt ist und von einem separaten umlaufenden doppelseitigen Zahnriemen (9) angetrieben ist, wobei der Tunnel (1) im Bereich des Zusammenwirkens des doppelseitigen Führungszahnriemens (2') mit dem separaten umlaufenden Zahnriemen (9) eine Ausnehmung (10) aufweist.

5.) Ringführanlage nach Anspruch 4, dadurch gekennzeichnet, daß der separate umlaufende Zahnriemen (9) über beabstandete ggf. mit eigenem Antrieb versehene Umlenkrollen geführt ist und zwischen diesen in den doppelseitigen Führungszahnriemen (2') flach eingreift und von einem Leitelement (11) abgestützt wird.

6.) Ringführanlage nach mindestens einem der Ansprüche 1 bis 5, dadurch gekennzeichnet, daß der Schlitten (3) an Rollen (12) gelagert ist und Kurvenlaufeigenschaften aufweist.

7.) Ringführanlage nach mindestens einem der Ansprüche 1 bis 6, dadurch gekennzeichnet, daß zum wahlweisen hängenden oder stehenden Einbau der Schlitten (3) um jeweils 90° versetzt angeordnete vorgefertigte Zahnleisten (13) besitzt und daß der Schlitz (4) des Tunnels (1) in waagerechter oder nach oben oder unten offener Position an der Tragekonstruktion (14) anbringbar ist.

8.) Ringführanlage nach einem der Ansprüche 1 bis 7, dadurch gekennzeichnet, daß zwischen den Zahnungen (13) des Schlittens 3 und der Zahnriemen (2, 2') ein ausreichendes Spiel (15) belassen ist.

Fig 1

Fig 2

Fig 3

Fig 4

0 277 285

Fig 5

Fig 6

Fig 7

Fig 8

Fig 9

Fig 10

Fig 11

Fig 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | WO-A-8 404 869 (HB AUTONOM) ----- | | A 01 K 15/02 |
| | | | **RECHERCHIERTE SACHGEBIETE (Int. Cl.4)** |
| | | | A 01 K |

Der vorliegende Recherchenbericht wurde für alle Patentansprüche erstellt

| Recherchenort | Abschlußdatum der Recherche | Prüfer |
|---|---|---|
| DEN HAAG | 26-04-1988 | VILBIG K |